# EUROPÄISCHE PATENTSCHRIFT

(11) **EP 2 197 594 B1**
(45) Veröffentlichungstag und Bekanntmachung des Hinweises auf die Patenterteilung: **11.06.2014**
(21) Anmeldenummer: 08802276.9
(22) Anmeldetag: 17.09.2008
(51) Int. Cl.: B05D 5/02, B05D 5/06, B44C 1/24, B44C 5/04, B32B 29/06, B32B 38/06, E04F 15/02

(54) **VERFAHREN ZUM HERSTELLEN EINES FUSSBODENPANEELS MIT HOHER RUTSCHFESTIGKEIT**
METHOD FOR PRODUCING A FLOOR PANEL HAVING GOOD NON-SLIP PROPERTIES
PROCÉDÉ DE FABRICATION DE PANNEAU DE PLANCHER PRÉSENTANT UN GRAND POUVOIR ANTIDÉRAPANT

(30) Priorität: 28.09.2007 DE 102007046532
(43) Veröffentlichungstag der Anmeldung: 23.06.2010
(73) Patentinhaber: LaminatePark GmbH & Co. KG, 66265 Heusweiler (DE)
(72) Erfinder: EISERMANN, Ralf, 56812 Cochem (DE)
(74) Vertreter: Bauer Vorberg Kayser Patentanwälte
(86) Internationale Anmeldenummer: PCT/EP2008/007748
(87) Internationale Veröffentlichungsnummer: WO 2009/043483

(56) Entgegenhaltungen:
- EP-A- 1 323 683
- EP-A- 1 820 640
- EP-A- 1 985 464
- WO-A-2006/066776
- WO-A-2006/136949
- WO-A-2009/013580
- DE-C1- 3 211 388
- DE-C1- 3 545 171
- US-A1- 2006 144 004

## Beschreibung

Die Erfindung betrifft ein Verfahren zum Herstellen eines Fußbodenpaneels, das eine Trägerplatte und eine an einer Oberseite der Trägerplatte angeordnete Dekorschicht aufweist.

Aus dem Stand der Technik sind Fußbodenpaneele mit einer Trägerplatte bekannt, die aus Holzspänen oder Holzfasern unter Zugabe von Leim und/oder Harzen durch Pressen in einer Holzplattenpresse hergestellt werden, wodurch beispielsweise mitteldichte Faserplatten (MDF-Platten) oder hochdichte Faserplatten (HDF-Platten) entstehen. In der Regel wird dabei die Trägerplatte in einem kontinuierlichen Prozess hergestellt und dann in einer Sägestation zerlegt.

Die Dekorschicht umfasst in der Regel bedrucktes Papier, das mit Melaminharz getränkt wird und zusammen mit einem Overlay bzw. mit einer Schutzschicht unter Hitze und Druck in einer Presse auf die Trägerplatte gepresst wird. Durch das Pressen der Dekorschicht auf die Trägerplatte entsteht eine Laminatplatte, die dann in einzelne Fußbodenpaneele geteilt wird.

Des Weiteren ist aus dem Stand der Technik bekannt, über eine Prägestruktur in einem Presswerkzeug der Presse in die Dekorschicht eine Struktur einzubringen, um einem Fußboden, der sich aus den Fußbodenpaneelen zusammensetzt, ein natürliches Aussehen zu vermitteln. Soll durch die Dekorschicht beispielsweise ein Holzboden nachgebildet werden, so wird der Eindruck des mit einem Holzmuster bedruckten Dekorpapiers durch eingeprägte Vertiefungen unterstützt, die Holzporen oder Holzmaserungen nach empfunden sind. Beispielsweise ist aus der WO 2001/096689 A1 oder der US 2002/0014047 A1 sowie aus der WO 2006/136949 A ein Laminatpaneel mit einem Holzmuster-Dekorpapier bekannt, wobei auf dem Dekorpapier eine transparente Schicht mit Vertiefungen angebracht ist, die im Wesentlichen dem Holzmuster folgen. Aus der EP 1 820 574 ist bekannt, eine Prägewalze zum Aufbringen einer Oberflächenstruktur auf ein Paneel einzusetzen.

Aus der DE 195 18 270 C1 ist zudem ein rutschfester Fußbodenbelag bekannt, auf dessen Oberfläche linsenförmige, scharfkantige, möglichst flache Vertiefungen angeordnet sind. Diese Mikrokrater sollen eine Saugnapfwirkung aufweisen, durch die der Fußbodenbelag eine hohe Rutschfestigkeit aufweist. Die Mikrokrater werden dabei durch gezielte und definierte Laserimpulse in die Oberfläche des Fußbodenbelags eingebracht. Bezogen auf die Herstellung eines Fußbodenpaneels, dessen Dekorschicht und Trägerplatte in einer Presse verpresst werden, würde dies zu einem zusätzlichen Bearbeitungsschritt führen, bei dem eine vergleichsweise aufwendige Technologie eingesetzt werden muss.

Der Erfindung liegt daher die Aufgabe zugrunde, ein Verfahren bereitzustellen, durch das sich Fußbodenpaneele mit hoher Rutschfestigkeit einfach und kostengünstig herstellen lassen.

Die der Erfindung zugrunde liegende Aufgabe wird mit der Merkmalskombination gemäß Anspruch 1 gelöst. Bevorzugte Ausführungsbeispiele können den Unteransprüchen entnommen werden.

Das Verfahren zum Herstellen eines Fußbodenpaneels gemäß Anspruch 1 zeichnet sich dadurch aus, dass beim Pressen durch ein Presswerkzeug Mikrovertiefungen in eine Oberfläche der Dekorschicht eingebracht werden. Das Presswerkzeug kann beispielsweise als Pressblech, Endlosband oder Presswalze ausgebildet sein.

Erfindungsgemäß wird beim Pressen durch das Presswerkzeug beispielsweise in Form eines Pressbleches zusätzlich zu den Mikrovertiefungen eine überlagerte Oberflächenstruktur in die Oberfläche der Dekorschicht eingebracht. Durch diese überlagerte Oberflächenstruktur werden bei einem Fußbodenpaneel, dessen Dekorschicht ein Holzmuster aufweist, Holzporen oder Holzmaserungen nachgebildet. Diese überlagerte Oberflächenstruktur weist Vertiefungen auf, die in ihren Ausmaßen deutlich größer sind als die Mikro-Vertiefungen, durch die die hohe Rutschfestigkeit entsteht. Natürlich können durch die Dekorschicht mit der überlagerten Oberflächenstruktur auch andere Materialen nachgebildet werden (zum Beispiel Steinmaterialen, wie sie für Fliesen oder dergleichen bekannt sind).

Durch die Mikrovertiefungen wird die Oberfläche der Dekorschicht aufgerauht. Je nach Größe, Verteilung und Form der Mikrovertiefungen entsteht dabei eine Struktur, die der Oberflächenstruktur eines Schleif- oder Sandpapiers ähnelt. In einem bevorzugten Ausführungsbeispiel bilden benachbarte Mikrovertiefungen eine geschlossene Linie, wodurch separate Mikroerhöhungen gebildet werden. Diese separaten Mikroerhöhungen ähneln in ihrer Funktion Schleifmittelkörnern eines Schleifpapiers.

Vorzugsweise ist eine maximale Tiefe der Mikrovertiefungen geringer als 120 µm. Es lassen sich gute Ergebnisse hinsichtlich der Rutschfestigkeit erzielen, wenn die maximale Tiefe der Mikrovertiefungen auf 90 µm, 50 µm oder gar auf 20 µm beschränkt ist.

Die Dekorschicht kann mehrlagig ausgebildet sein. Beispielsweise können ein Dekorpapier und wenigstens eine darauf angeordnete Schutzschicht vorgesehen sein. Die Schutzschicht kann dabei einen härtbaren Harz umfassen, der vorzugsweise ein Aminoharz ist. Bevorzugt wird dabei die Verwendung eines Melaminharzes und eines Harnstoffharzes.

Die Schutzschicht kann partikelförmige Abriebmaterialien umfassen. Bevorzugt werden dabei mineralische Partikel wie Aluminiumoxid-Partikel oder Korund-Partikel.

Neben der Schutzschicht, die partikelförmige Abriebmaterialien und einen härtbaren Harz umfassen, kann eine weitere Schicht vorgesehen sein, die an der der Dekorschicht abgewandten Seite der Schutzschicht angeordnet ist. Durch diese zusätzliche Schicht, die vorzugsweise Aminoharz enthält, lässt sich ein Verschleiß der Pressbleche aufgrund der partikelförmigen Abriebmaterialien verringern, so dass mit den Pressblechen eine größere Anzahl von Presszyklen realisiert werden kann.

Insbesondere, wenn keine zusätzliche Schicht vorgesehen ist, können hohe Rutschfestigkeitswerte erreicht werden. In diesem Fall bildet die Schutzschicht, die die partikelförmigen Abriebmaterialien umfasst, die äußere Schicht des Fußbodenpaneels. In diese Schicht werden dann die Mikrovertiefungen direkt eingebracht, was dazu führen kann, dass die abriebfesten Partikel zum Teil freigelegt werden und Teil der Oberfläche der Dekorschicht bilden. Dies führt zu einem Aufbau, der dem eines Schleifpapiers oder eines Sandpapiers ähnelt. Bei einem Schleifpapier stehen abriebfeste Schleifkörner aus einem Bindemittel hervor, durch das die einzelnen Schleifkörner mit einer Unterlage des Schleifpapiers verbunden sind.

Das Presswerkzeug kann eine Hartbeschichtung aufweisen, in die eine Prägestruktur eingebracht ist, durch die die Mikrovertiefungen hergestellt werden. Diese Hartbeschichtung ist vorzugsweise eine Chromschicht.

Eine bevorzugte Möglichkeit, eine Prägestruktur in die Chromschicht einzubringen, besteht darin, zunächst eine Ätzschutzschicht aufzutragen und danach ein Ätzverfahren durchzuführen, wobei die Ätzschutzschicht Teilbereiche der Hartbeschichtung vor einem Materialabtrag schützt. Dort, wo das Ätzmittel ungehindert auf die Hartbeschichtung bzw. die Chromschicht einwirken kann, wird Material abgetragen, so dass an diesen Stellen Vertiefungen in der Hartbeschichtung entstehen.

Vorzugsweise beträgt eine Gesamtfläche der Ätzschutzschicht weniger als 50% einer Pressfläche des Presswerkzeuges. Dies bedeutet, dass in diesem Ausführungsbeispiel mehr als die Hälfte der Fläche der Chromschicht abgetragen wird, wodurch Erhöhungen entstehen, die dann beim Pressen in der Presse zu den Mikrovertiefungen in der Oberfläche der Dekorschicht des Fußbodenpaneels führt. Die Ätzschutzschicht kann sich dabei aus einer Vielzahl von kleinen Punkten zusammensetzen, die dann zu punktförmigen Erhöhungen in der Chromschicht führen. Die Gesamtfläche dieser Punkte, oder allgemein, der Ätzschutzschicht kann auch Werte annehmen, die kleiner als 40 oder sogar 30 % sind.

Die überlagerte Oberflächenstruktur, durch die sich im Falle eines Holzmuster-Dekors Holzporen oder Holzmaserungen nachahmen lassen, kann über eine überlagerte Prägestruktur hergestellt werden, wobei die überlagerte Prägestruktur in einer unter der Hartbeschichtung liegenden Grundschicht des Presswerkzeuges eingebracht ist. Diese Grundschicht, die beispielsweise aus Edelstahl sein kann, kann dabei ebenfalls einem Ätzverfahren unterzogen werden, wobei durch Auftragen einer Ätzschutzschicht sich die gewünschte überlagerte Prägestruktur einstellen lässt. Nach erfolgtem Einbringen der überlagerten Prägestruktur wird dann die Hartbeschichtung aufgetragen, die ihrerseits einem weiteren Ätzverfahren unterzogen wird. Neben den Ätzverfahren können auch andere Abtragverfahren zum Einsatz kommen, beispielsweise durch Funkenerosion oder Laserbearbeitung.

Anhand eines in der Zeichnung dargestellten Fußbodenpaneels soll die Erfindung näher erläutert werden. Es zeigen:
- Figur 1: schematisch einen Querschnitt eines Fußbodenpaneels; und
- Figur 2: einen Teil der Figur 1 im vergrößerten Maßstab.

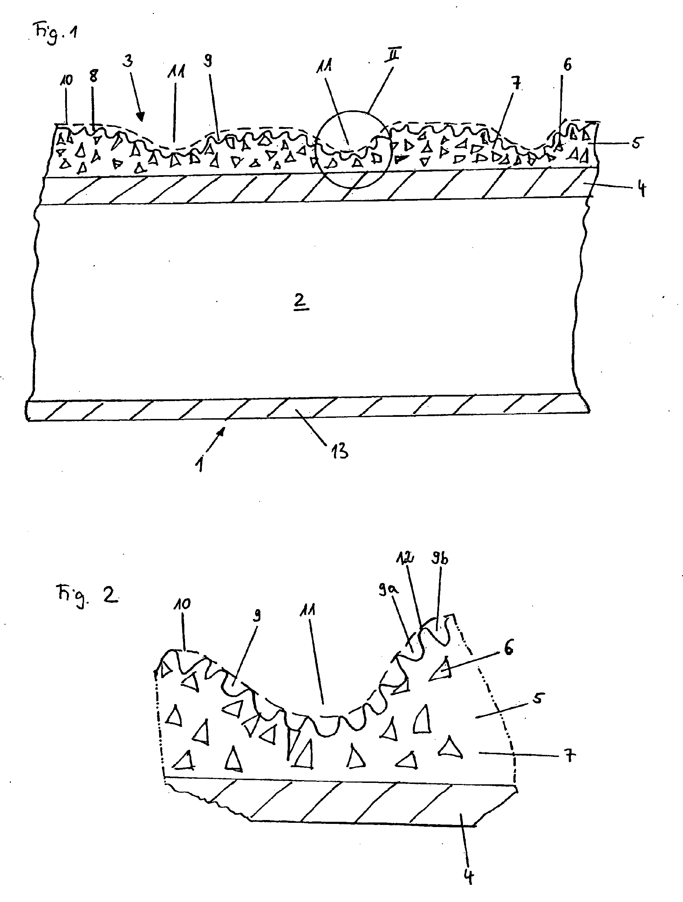

Figur 1 zeigt schematisch im Querschnitt ein Fußbodenpaneel 1. Das Fußbodenpaneel 1 umfasst eine Trägerplatte 2, die beispielsweise aus einer MDF- oder HDF-Platte hergestellt sein kann. Die Trägerplatte 2 kann auch aus anderen Materialien hergestellt sein.

An der Trägerplatte 2 ist oberseitig eine Dekorschicht 3 angebracht, die ein in Melaminharz getränktes Dekorpapier 4 und eine Schutzschicht 5 umfasst. Die Schutzschicht 5 umfasst eine Vielzahl von Korund-Partikeln 6, die in einer Matrix aus Melaminharz 7 eingebettet sind.

In eine Oberfläche 8 der Dekorschicht 3 sind eine Vielzahl von Mikrovertiefungen 9 eingebracht, die insbesondere auch der Figur 2 zu entnehmen sind. Figur 2 zeigt im Vergrößerten Maßstab einen mit II gekennzeichneten Ausschnitt der Figur 1.

Die Oberfläche 8 wird jedoch nicht nur durch die Mikrovertiefungen 9 geprägt, sondern auch durch eine überlagerte Oberflächenstruktur, die mittels einer gestrichelten Linie 10 verdeutlicht ist. Diese überlagerte Oberflächenstruktur 10 bildet größere Vertiefungen 11 aus, die Holzporen oder Holzmaserungen nachbilden sollen. Zu erkennen ist, dass die Ausmaße der Vertiefungen 11 wesentlich größer sind als die Ausmaße der Mikrovertiefungen 9. Dies betrifft zum einen die Tiefe als auch die Ausmaße senkrecht zur Tiefe einer jeweiligen Vertiefung 9, 11.

Durch die Mikrovertiefungen 9 wird die Oberfläche 8 der Dekorschicht aufgerauht, so dass bessere Rutschfestigkeitswerte erreicht werden können. Beim Einbringen der Mikrovertiefungen 9 während des Pressens können einzelne Korund-Partikel 6 an der Oberfläche 8 zumindest teilweise freigelegt werden, wodurch sich die Oberfläche 8 anfühlt wie die Oberfläche eines Schleif- oder Sandpapiers.

Zwischen zwei benachbarten Mikrovertiefungen 9a, 9b (siehe Figur 2) bildet sich eine Mikroerhöhung 12 aus, die wie ein Schleifkorn bei einem Schleifpapier hervorsteht und somit wesentlich dazu beiträgt, dass die Oberfläche 8 sich wie ein Schleifpapier anfühlt. Durch die Form der Mikrovertiefungen 9, deren Anzahl und deren Verteilung lassen sich die Form, Höhe, Abstand und Anzahl der Mikroerhöhungen 12 einstellen, wodurch die Rutschfestigkeit der Oberfläche 8 gezielt eingestellt werden kann. Die Mikroerhöhungen 12 können punktförmig, im wesentlichen kreisförmig oder auch andere Formen annehmen.

Das Fußbodenpaneel 1 der Figur 1 weist zudem einen Gegenzug 13 auf, der an einer Unterseite der Trägerplatte 2 angebracht ist. Durch den Gegenzug 13 soll eine gute Planlage sichergestellt und ein Verziehen des Fußbodenpaneels 1 verhindert werden.

### Bezugszeichenliste

- 1: Fußbodenpaneel
- 2: Trägerplatte
- 3: Dekorschicht
- 4: Dekorpapier
- 5: Schutzschicht
- 6: Korund-Partikel
- 7: Matrix aus Melaminharz
- 8: Oberfläche
- 9: Mikrovertiefung
- 10: überlagerte Oberflächenstruktur
- 11: Pore
- 12: Mikroerhöhung
- 13: Gegenzug

## Patentansprüche

1. Verfahren zum Herstellen eines Fußbodenpaneels (1), das eine Trägerplatte (2) und eine an einer Oberseite der Trägerplatte (2) angeordnete Dekorschicht (3) aufweist, wobei die Dekorschicht (3) ein Dekorpapler (4) und wenigstens eine Schutzschicht (5) aufweist und die Schutzschicht (5) partikelförmige Abriebmateriallen umfasst; wobei die Dekorschicht (3) In einer Presse unter Zuführung von Wärme auf die Trägerplatte (2) gepresst wird, wobei beim Pressen durch ein Presswerkzeug eine Oberflächenstruktur (10) in eine Oberfläche (8) der Dekorschicht (3) eingebracht wird, die zur Nachbildung eines Holzmusters oder eines anderen Materials dient, wobei beim Pressen durch das Presswerkzeug Mikrovertlefungen (9) in die Oberfläche (8) der Dekorschicht (3) eingebracht werden, um eine hohe Rutschfestigkeit zu erreichen, wobei die Oberflächenstruktur die Mikrovertiefungen überlagert und ebenfalls Vertiefungen aufweist, die In ihren Ausmaßen grösser als die Mikrovertiefungen sind, **dadurch gekennzeichnet, dass** zwischen zwei Mikrovertiefungen eine Mikroerhöhung ausgebildet wird und dass durch das Prägen ein Freilegen des partikelförmigen Abriebmaterials der Schutzschicht erreicht wird.

2. Verfahren nach Anspruch 1, **dadurch gekennzeichnet, dass** benachbarte Mikrovertlefungen (9) eine geschlossene Linie bilden.

3. Verfahren nach Anspruch 1 oder 2, **dadurch gekennzeichnet, dass** die Mikrovertiefungen eine maximale Tiefe kleiner 120 µm aufweisen.

4. Verfahren nach einem der Ansprüche 1 bis 3, **dadurch gekennzeichnet, dass** das Presswerkzeug eine Hartbeschichtung aufweist, in die eine Prägestruktur eingebracht ist, durch die die Mikrovertiefungen (9) hergestellt werden.

5. Verfahren nach Anspruch 4, **dadurch gekennzeichnet, dass** die Hartbeschichtung eine Chromschicht ist.

6. Verfahren nach Anspruch 4 oder 5, **dadurch gekennzeichnet, dass** die überlagerte Oberflächenstruktur (10) durch eine überlagerte Prägestruktur hergestellt wird, wobei die überlagerte Prägestruktur in einer unter der Hartbeschichtung liegenden Grundschicht des Presswerkzeugs eingebracht ist.

## Claims

1. A method for producing a flooring panel (1) comprising a carrier plate (2) and a decorative layer (3) disposed on a top side of the carrier plate (2), wherein the decorative layer (3) comprises a decorative paper (4) and at least one protective layer (5) and the protective layer (5) comprises particle-shaped abrasion materials; wherein the decorative layer (3) is pressed in a press while the carried plate (2) is being supplied with heat, wherein a surface pattern (10), which serves for imitating a wood pattern or another material, is introduced into a surface (8) of the decorative layer (3) by a pressing tool during pressing, wherein microdepressions (9) are introduced into the surface (8) of the decorative layer (3) by the pressing tool during pressing in order to achieve a high level of slip-resistance, wherein the surface structure superimposes the microdepressions and also comprises depressions with greater dimensions than the microdepressions, **characterised in that** a microelevation is formed between two microdepressions and that an exposure of the particle-shaped abrasion material of the protective layer is accomplished by the embossing process.

2. The method according to claim 1, **characterised in that** adjacent microdepressions (9) form a continuous line.

3. The method according to claim 1 or 2, **characterised in that** the microdepressions have a maximum depth of less than 120 µm.

4. The method according to any one of the claims 1 to 3, **characterised in that** the pressing tool comprises a hard coating into which an embossed pattern has been introduced by means of which the microdepressions (9) are produced.

5. The method according to claim 4, **characterised in that** the hard coating is a chromium layer.

6. The method according to claim 4 or 5, **characterised in that** the superimposed surface pattern (10) is produced by a superimposed embossed pattern, wherein the superimposed embossed pattern is introduced into a base layer of the pressing tool situated underneath the hard coating.

## Revendications

1. Procédé de fabrication d'un panneau de plancher (1) qui présente une plaque de support (2) et une couche de décor (3) disposée sur une surface supérieure de ladite plaque de support (2), ladite couche de décor (3) présentant un papier de décor (4) et au moins une couche protectrice (5), et ladite couche protectrice (5) comprenant des matériaux d'abrasion sous forme de particules, ladite couche de décor (3) étant pressée sur la plaque de support (2) dans une presse en amenant de la chaleur, dans lequel, lors du pressage, une structure de surface (10) est réalisée par un outil de pressage dans une surface (8) de ladite couche de décor (3), qui sert à imiter un motif de bois ou d'une autre matière, dans lequel, lors du pressage, des microcavités (9) sont réalisées par ledit outil de pressage dans la surface (8) de la couche de décor (3) afin de parvenir à un grand pouvoir antidérapant, la structure de surface se superposant auxdites microcavités et présentant, elle aussi, des cavités dont les dimensions sont supérieures à celles des microcavités, **caractérisé par le fait qu'**une micro-protubérance est réalisée entre deux microcavités et que l'on parvient, par l'estampage, à dégager le matériau d'abrasion sous forme de particules de la couche protectrice.

2. Procédé selon la revendication 1, **caractérisé par le fait que** des microcavités (9) voisines forment une ligne continue.

3. Procédé selon la revendication 1 ou 2, **caractérisé par le fait que** les microcavités présentent une profondeur maximale inférieure à 120 µm.

4. Procédé selon l'une quelconque des revendications 1 à 3, **caractérisé par le fait que** ledit outil de pressage présente un revêtement dur dans lequel est réalisée une structure d'estampage par laquelle lesdites microcavités (9) sont produites.

5. Procédé selon la revendication 4, **caractérisé par le fait que** ledit revêtement dur est une couche de chrome.

6. Procédé selon la revendication 4 ou 5, **caractérisé par le fait que** ladite structure de surface (10) superposée est réalisée par une structure d'estampage superposée, ladite structure d'estampage superposée étant réalisée dans une couche de base de l'outil de pressage qui est située au-dessous du revêtement dur.
